# EUROPEAN PATENT SPECIFICATION

(11) **EP 2 933 641 B1**
(45) Date of publication and mention of the grant of the patent: **28.02.2018**
(21) Application number: 15162584.5
(22) Date of filing: 07.04.2015
(51) Int. Cl.: G01N 35/00

(54) **AUTOMATED ANALYZER DISPLAYING AN ANALYSIS RESULT AND A TIMING AT WHICH THE REAGENT IS ADDED TO THE REACTION CONTAINER**
AUTOMATISCHER ANALYSATOR WELCHER EIN MESSERGEBNIS, SOWIE EINEN ZEITPUNKT ZU DEM DAS REAGENZ DER REAKTION BEIGEMENGT WIRD, ANZEIGT
ANALYSEUR AUTOMATIQUE AFFICHANT UN RÉSULTAT D'ANALYSE ET L'INSTANT D'AJOUT DU RÉACTIF DANS LE RÉCIPIENT DE RÉACTION

(30) Priority: 17.04.2014 JP 2014085535
(43) Date of publication of application: 21.10.2015
(73) Proprietor: JEOL LTD., Akishima, Tokyo 196-8558 (JP)
(72) Inventor: Tomii, Shinichi, Akishima, Tokyo 196-8558 (JP)
(74) Representative: Boult Wade Tennant

(56) References cited:
- US-A1- 2007 077 643
- US-A1- 2012 321 514

## Description

### BACKGROUND OF THE INVENTION

### Field of the Invention:

The present invention relates to an automatic analyzer that causes a specimen to react with a reagent to thereby analyze components of the specimen, and a method of displaying an analysis result.

### Description of the Related Art:

A biochemical analyzer that analyzes various components contained in a specimen such as blood and urine is known as an automatic analyzer. In the biochemical analyzer, a specimen such as blood serum or urine is diluted under a certain condition, and then, the diluted specimen is dispensed into a reaction container. Then, a reagent according to analysis items and the specimen are mixed in the reaction container and then are caused to react with each other. Furthermore, the biochemical analyzer converts the amount of change in absorbance into a concentration, thereby analyzing a substance to be measured contained in the specimen. Japanese Patent Application Publication JP2010048788 discloses an automatic analyzer in which a reagent and a specimen, which are dispensed in a reaction container, are caused to react with each other, and the specimen is analyzed by measurement of absorbance of the reaction liquid.

In United States Patent Application Publication US 2012/0321514, there is described an analyzer system comprising: a transporting apparatus having a rack stocker for stocking a rack which holds one or more samples, the transporting apparatus being configured to transport the rack in the rack stocker; a measuring apparatus configured to perform a measurement on a sample of the rack transported by the transporting apparatus; an obtaining section configured to obtain identification data of a person who sets the rack on the rack stocker; a data storage; and a system controller, is disclosed. The system controller is configured to store, in the data storage, a result of the measurement of the sample as well as the identification data obtained from the person who had set the rack holding the sample on the rack stocker.

In United States Patent Application Publication US 2007/0077643, there is described a biochemical processing apparatus, equipped with a display device upon which information on a job in progress is displayed.

### Disclosure of the Invention

### Problems to be Solved by the Invention

Incidentally, the specimen needs to be mixed with the reagent according to analysis items at an appropriate timing, by using this type of automatic analyzer. Namely, the absorbance of the reaction liquid usually changes with the passage of time. Accordingly, in measuring the absorbance of the reaction liquid, it is necessary to correctly manage an elapsed time from the timing when the reagent is mixed. In the conventional automatic analyzer, an injection timing of the reagent and a timing of measurement of the absorbance are automated, which leads to a problem in that an operator who operates the automatic analyzer cannot easily recognize whether or not a reaction caused by the addition of the reagent is appropriately measured at a right timing.

For example, with the automatic analyzer, if the absorbance obtained through mixture of the reagent with the specimen falls outside of a standard value, the component contained in the specimen is determined to have an abnormal value. However, in the case where the timing of mixing the reagent is shifted due to a certain trouble, inappropriate absorbance is likely to be detected even if abnormality does not exist in the component contained in the specimen. Therefore, it is preferable for the operator who operates the automatic analyzer to be able to check whether the specimen and the reagent are added at a correct timing set in advance, by using the automatic analyzer. However, it is not possible to easily perform such checking by using the conventional automatic analyzer.

An object of the present invention is to enable an operator who operates an automatic analyzer to easily check the addition timing of a reagent to a specimen.

### SUMMARY OF THE INVENTION

In accordance with the present invention, there is described an automatic analyzer and a method of displaying an analysis result as set out in the appended claims.

### Effects of the Invention

According to the present invention, in a screen which displays measurement data on absorbance, there is performed display in which a timing when a reagent is added can be grasped Accordingly, an operator who operates the automatic analyzer can recognize a timing of adding the reagent on the basis of the display screen for the measurement data, which makes it possible to easily judge whether or not analysis operations are appropriately performed.

### BRIEF DESCRIPTION OF THE DRAWINGS

Fig. 1 is a diagram schematically illustrating a configuration of an automatic analyzer according to an exemplary embodiment of the present invention.
Fig. 2 is a block diagram illustrating an example of a configuration within a calculator of the automatic analyzer according to the exemplary embodiment of the present invention.
Fig. 3 is a flowchart illustrating an example of a procedure of analysis processing according to the exemplary embodiment of the present invention.
Fig. 4 is a flowchart illustrating an example of a procedure of displaying processing for analysis results according to the exemplary embodiment of the present invention.
Fig. 5 is an explanatory view illustrating an example (Example 1) of display of analysis results according to the exemplary embodiment of the present invention.
Fig. 6 is an explanatory view illustrating an example (Example 2) of display of analysis results according to the exemplary embodiment of the present invention.
Fig. 7 is an explanatory view illustrating an example (Example 3) of display of analysis results and a display example of a setting screen according to the exemplary embodiment of the present invention.

### DESCRIPTION OF THE PREFERRED EMBODIMENTS

Hereinafter, an automatic analyzer according to an exemplary embodiment of the present invention will be described with reference to the attached drawings.

### [1. Configuration of Automatic Analyzer]

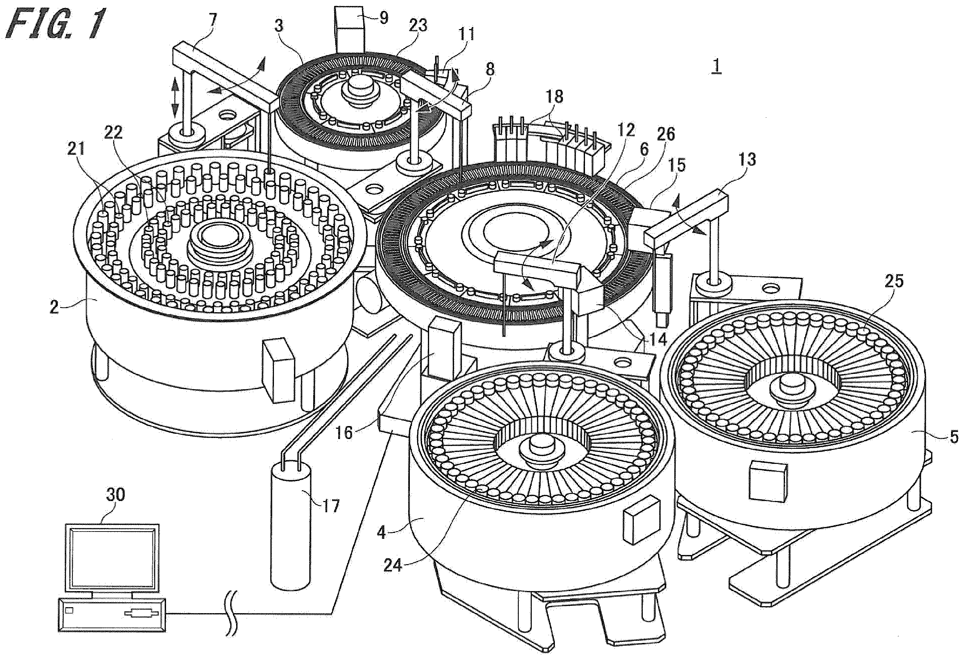

First, an automatic analyzer according to an exemplary embodiment of the present invention will be described with reference to Fig. 1.

An automatic analyzer 1 is a biochemical analyzer that automatically measures the amount of a specific component contained in a biological specimen such as blood or urine.

As illustrated in Fig. 1, the automatic analyzer 1 includes a sample turntable 2, a dilution turntable 3, a first reagent turntable 4, a second reagent turntable 5, and a reaction turntable 6. Furthermore, the biochemical analyzer 1 includes a sample-diluting pipette 7, a sampling pipette 8, a dilution-stirring device 9, a dilution-cleaning device 11, a first reagent pipette 12, a second reagent pipette 13, a first reaction-stirring device 14, a second reaction-stirring device 15, a multi-wavelength photometer 16, a thermostatic chamber 17, a reaction-container cleaning device 18, and a calculator 30.

The sample turntable 2 (one example of a specimen-container holding section) is formed substantially into a cylindrical-container shape having one end (upper side in Fig. 1) in the axial direction opened. This sample turntable 2 contains plural specimen containers 21, and plural containers 22 including, for example, a control specimen, a calibrator, and a diluting fluid. Each of the specimen containers 21 contains a specimen (sample) including, for example, blood and urine. In this example, each of the containers 22 contains a diluting fluid.

The plural specimen containers 21 are arranged at predetermined intervals in the circumferential direction of the sample turntable 2. In the example illustrated in Fig. 1, the specimen containers 21, arranged in the circumferential direction of the sample turntable 2, are disposed in two rows at a predetermined distance therebetween in the radial direction of the sample turntable 2.

The plurality of containers 22 is disposed closer to the inner side than the rows of the plurality of specimen containers 21 in the radial direction of the sample turntable 2. As with the plurality of specimen containers 21, the plurality of containers 22 is arranged at predetermined intervals in the circumferential direction of the sample turntable 2. The containers 22 are disposed in two rows at a predetermined distance therebetween in the radial direction of the sample turntable 2.

Note that arrangements of the plurality of specimen containers 21 and plural containers 22 are not limited to two rows. The arrangements may be one row, or may be three or more rows in the radial direction of the sample turntable 2.

The sample turntable 2 is rotatably supported using a driving mechanism, not illustrated, along the circumferential direction thereof. In addition, the sample turntable 2 is rotated using the driving mechanism not illustrated, at a predetermined speed for each predetermined angle range in the circumferential direction. Furthermore, the dilution turntable 3 (one example of a dilution-container holding section) is disposed around the sample turntable 2.

The dilution turntable 3, the first reagent turntable 4 (one example of a first reagent-container holding section), the second reagent turntable 5 (one example of a second reagent-container holding section), and the reaction turntable 6 (one example of a reaction-container holding section) are each formed in a substantially cylindrical shape in which one end thereof (upper side in Fig. 1) in the axial direction is opened, as with the sample turntable 2. The dilution turntable 3 and the reaction turntable 6 are rotated using the driving mechanism not illustrated, at a predetermined speed for each predetermined angle range in the circumferential direction. Note that the reaction turntable 6 is set, for example, so as to rotate by half or more rotation during one movement. The half or more rotation during one movement is only one example, and the amount of rotation during operation varies depending on device configurations.

In the dilution turntable 3, a plurality of dilution containers 23 is accommodated so as to be arranged in the circumferential direction of the dilution turntable 3. In each of the dilution containers 23, a specimen sucked from the specimen container 21 arranged in the sample turntable 2 and diluted (hereinafter, referred to as a "diluted specimen") is accommodated.

In the first reagent turntable 4, a plurality of first reagent containers 24 is accommodated so as to be arranged in the circumferential direction of the first reagent turntable 4. Furthermore, in the second reagent turntable 5, a plurality of second reagent containers 25 is accommodated so as to be arranged in the circumferential direction of the second reagent turntable 5. In each of the first reagent containers 24, a first reagent is accommodated, and in each of the second reagent containers 25, a second reagent is accommodated.

The reaction turntable 6 is disposed between the dilution turntable 3 and two reagent turntables 4 and 5. In the reaction turntable 6, a plurality of reaction containers 26 is accommodated so as to be arranged in the circumferential direction of the reaction turntable 6. A diluted specimen sampled from the dilution container 23 of the dilution turntable 3, the first reagent sampled from the first reagent container 24 of the first reagent turntable 4, and the second reagent sampled from the second reagent container 25 of the second reagent turntable 5 are injected in each of the reaction containers 26. Then, the diluted specimen, the first reagent, and the second reagent are stirred to cause reaction within this reaction container 26.

The sample-diluting pipette 7 is disposed around the sample turntable 2 and the dilution turntable 3. The sample-diluting pipette 7 is movably supported using a driving mechanism for a dilution pipette not illustrated, in the axial direction (for example, in the vertical direction) of the sample turntable 2 and the dilution turntable 3. Furthermore, the sample-diluting pipette 7 is turnably supported using the driving mechanism for a dilution pipette along a horizontal direction substantially parallel to the opening of each of the sample turntable 2 and the dilution turntable 3. In addition, the sample-diluting pipette 7 turns along the horizontal direction thereof to thereby reciprocate between the sample turntable 2 and the dilution turntable 3. Note that, when the sample-diluting pipette 7 moves between the sample turntable 2 and the dilution turntable 3, the sample-diluting pipette 7 passes through a cleaning device, not illustrated.

Here, operations performed by the sample-diluting pipette 7 will be described.

When the sample-diluting pipette 7 moves to a predetermined position above the opening of the sample turntable 2, the sample-diluting pipette 7 moves downward along the axial direction of the sample turntable 2, and inserts a tip end portion thereof into the specimen container 21. At this time, a pump for a sample, not illustrated, is operated, whereby the sample-diluting pipette 7 sucks a predetermined amount of specimen accommodated in the specimen container 21. Next, the sample-diluting pipette 7 moves upward along the axial direction of the sample turntable 2, and takes out the tip end portion thereof from the inside of the specimen container 21. In addition, the sample-diluting pipette 7 turns along the horizontal direction, and moves to a predetermined position above the opening of the dilution turntable 3.

Next, the sample-diluting pipette 7 moves downward along the axial direction of the dilution turntable 3, and inserts the tip end portion thereof into a predetermined dilution container 23. Then, the sample-diluting pipette 7 discharges, into the dilution container 23, the sucked specimen and the predetermined amount of diluting fluid (for example, physiological saline solution) supplied from the sample-diluting pipette 7 itself. As a result, within the dilution container 23, the specimen is diluted to prescribed times the concentration. After that, the sample-diluting pipette 7 is cleaned using the cleaning device.

The sampling pipette 8 is disposed between the dilution turntable 3 and the reaction turntable 6. The sampling pipette 8 is movably supported in the axial direction (in the vertical direction) of the dilution turntable 3 and is turnably supported in the horizontal direction, by using a driving mechanism for a sampling pipette not illustrated, as with the sample-diluting pipette 7. Then, the sampling pipette 8 reciprocates between the dilution turntable 3 and the reaction turntable 6.

This sampling pipette 8 inserts a tip end portion thereof into the dilution container 23 of the dilution turntable 3, and sucks a predetermined amount of diluted specimen. Then, the sampling pipette 8 discharges the sucked diluted specimen into the reaction container 26 of the reaction turntable 6, to thereby inject the diluted specimen into the reaction container 26.

The first reagent pipette 12 is disposed between the reaction turntable 6 and the first reagent turntable 4, and the second reagent pipette 13 is disposed between the reaction turntable 6 and the second reagent turntable 5. The first reagent pipette 12 is movably supported in the axial direction (in the vertical direction) of the reaction turntable 6 and is turnably supported in the horizontal direction, by using a driving mechanism for a first reagent pipette not illustrated. Then, the first reagent pipette 12 reciprocates between the first reagent turntable 4 and the reaction turntable 6.

The first reagent pipette 12 inserts a tip end portion thereof into the first reagent container 24 of the first reagent turntable 4, and sucks a predetermined amount of the first reagent. Then, the first reagent pipette 12 discharges the sucked first reagent into the reaction container 26 of the reaction turntable 6. After that first reagent is discharged, the diluted specimen is discharged into the reaction container 26.

Furthermore, the second reagent pipette 13 is movably supported in the axial direction (in the vertical direction) and the horizontal direction of the reaction turntable 6, and is turnably supported, by using a driving mechanism for a second reagent pipette not illustrated, as with the first reagent pipette 12. In addition, the second reagent pipette 13 reciprocates between the second reagent turntable 5 and the reaction turntable 6.

The second reagent pipette 13 inserts a tip end portion thereof into the second reagent container 25 of the second reagent turntable 5, and sucks a predetermined amount of the second reagent. Furthermore, the second reagent pipette 13 discharges the sucked second reagent into the reaction container 26 of the reaction turntable 6. With this discharge of the second reagent, the second reagent is added to the diluted specimen in the reaction container 26.

The dilution-stirring device 9 and the dilution-cleaning device 11 are disposed around the dilution turntable 3. The dilution-stirring device 9 inserts a stirrer, not illustrated, into the dilution container 23 to thereby stir the specimen and the diluting fluid.

The dilution-cleaning device 11 is a device that cleans the dilution container 23 after the diluted specimen is sucked by the sampling pipette 8. This dilution-cleaning device 11 includes a plurality of dilution-container cleaning nozzles. The plurality of dilution-container cleaning nozzles is connected to a pump for waste fluid, not illustrated, and a pump for cleaning agent, not illustrated. The dilution-cleaning device 11 inserts the dilution-container cleaning nozzles into the dilution container 23, and drives the pump for waste fluid to thereby suck the diluted specimen remaining in the dilution container 23 by using the dilution-container cleaning nozzles inserted. Then, the dilution-cleaning device 11 discharges the sucked diluted specimen to a tank for waste fluid, not illustrated.

After that, the dilution-cleaning device 11 supplies a cleaning agent from the pump for cleaning agent to the dilution-container cleaning nozzles, and discharges the cleaning agent from the dilution-container cleaning nozzles into the dilution container 23. The inside of the dilution container 23 is cleaned using this cleaning agent. Then, the dilution-cleaning device 11 sucks the cleaning agent by using the dilution-container cleaning nozzles to thereby dry the inside of the dilution container 23.

The first reaction-stirring device 14, the second reaction-stirring device 15, and the reaction-container cleaning device 18 are arranged around the reaction turntable 6. The first reaction-stirring device 14 inserts a stirrer, not illustrated, into the reaction container 26 to thereby stir the diluted specimen and the first reagent. With this operation, reaction between the diluted specimen and the first reagent is uniformly and rapidly performed.

The second reaction-stirring device 15 inserts a stirrer, not illustrated, into the reaction container 26 to thereby stir the diluted specimen, the first reagent, and the second reagent. With this operation, reaction among the diluted specimen, the first reagent, and the second reagent is uniformly and rapidly performed.

The reaction-container cleaning device 18 is a device that cleans the inside of the reaction container 26 after testing. This reaction-container cleaning device 18 includes a plurality of reaction-container cleaning nozzles. The plurality of reaction-container cleaning nozzles is connected to a pump for waste fluid, not illustrated, and a pump for cleaning agent, not illustrated, as with the dilution-container cleaning nozzles. Note that cleaning processes in the reaction-container cleaning device 18 are similar to those in the dilution-cleaning device 11 described above, and thus explanation thereof will be omitted.

The multi-wavelength photometer 16 serving as a luminous-intensity measuring section is disposed so as to face the outer wall of the reaction turntable 6 around the reaction turntable 6. The multi-wavelength photometer 16 performs optical measurements on a diluted specimen that is injected into the reaction container 26 and has reacted with the first reagent and the second reagent, outputs amounts of various components in the specimen as numeric data of "absorbance," and detects a reaction state of the diluted specimen. The multi-wavelength photometer 16 is connected with the calculator 30.

Furthermore, the thermostatic chamber 17 is disposed around the reaction turntable 6. This thermostatic chamber 17 is constituted so as to keep the reaction containers 26 provided on the reaction turntable 6 at a constant temperature at all times.

### [2. Configuration Example of Calculator]

Next, a configuration example of the calculator 30 of the automatic analyzer 1 will be described.

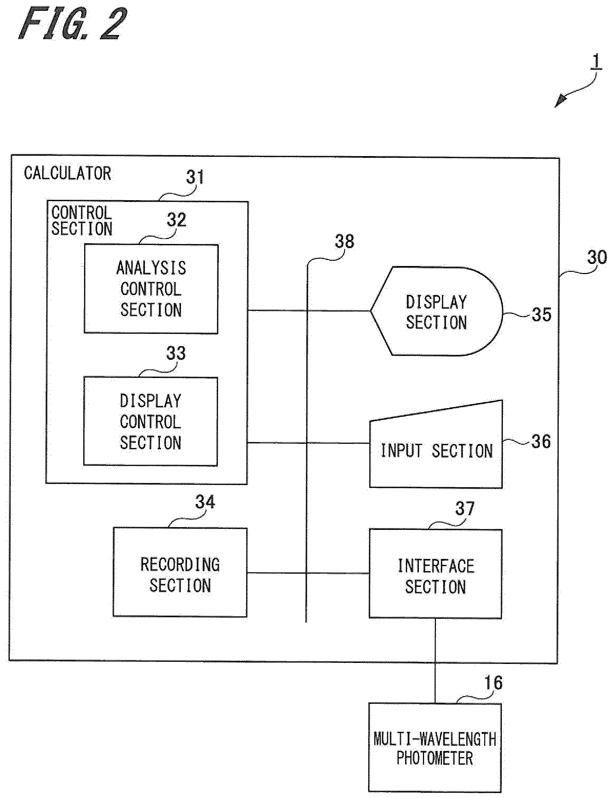

Fig. 2 is a block diagram illustrating a configuration example within the calculator 30.

The calculator 30 includes a control section 31, a recording section 34, a display section 35, an input section 36, and an interface section 37. The control section 31, the recording section 34, the display section 35, the input section 36, and the interface section 37 are connected to each other through a bus 38 so as to be able to transmit data.

The control section 31 is constituted of, for example, a central processing unit (CPU), and controls operations of each unit in the automatic analyzer 1. This control section 31 includes an analysis control section 32 and a display control section 33.

The analysis control section 32 controls injection timings of the diluted specimen or reagent into the reaction container 26, and controls timings of measuring a luminous intensity with the multi-wavelength photometer 16.

The display control section 33 acquires data measured by the multi-wavelength photometer 16 serving as a luminous-intensity measuring section of the automatic analyzer 1, and creates a display screen for the measurement data on each specimen on the basis of the measurement data. The display screen created by the display control section 33 is displayed on the display section 35.

The recording section 34 is constituted of, for example, a large-capacity recording device such as a hard disk drive (HDD) and a semiconductor memory; and records, for example, a program executed by the control section 31, parameters, calibration curves, measurement results, and input-operations performed by the input section 36.

The display section 35 displays an operation screen for the analyzer, a screen for analysis results, and the like. An example of the screen for analysis results will be described later. For example, a liquid crystal display device and the like are used for the display section 35.

The input section 36 receives operation input performed by a user on the automatic analyzer 1, and outputs input signals to the control section 31. For example, a mouse, a keyboard, a touch screen, and the like are used for the input section 36.

The measurement data on the diluted specimen, outputted by the multi-wavelength photometer 16, are inputted into the interface section 37, and the measurement data are transferred to the control section 31. Note that Fig. 2 illustrates an example in which only the multi-wavelength photometer 16 is connected to the interface section 37, but each section within the automatic analyzer 1 is connected to the interface section 37 in the same way, and control is performed using the calculator 30.

### [3. Example of Analysis Processing]

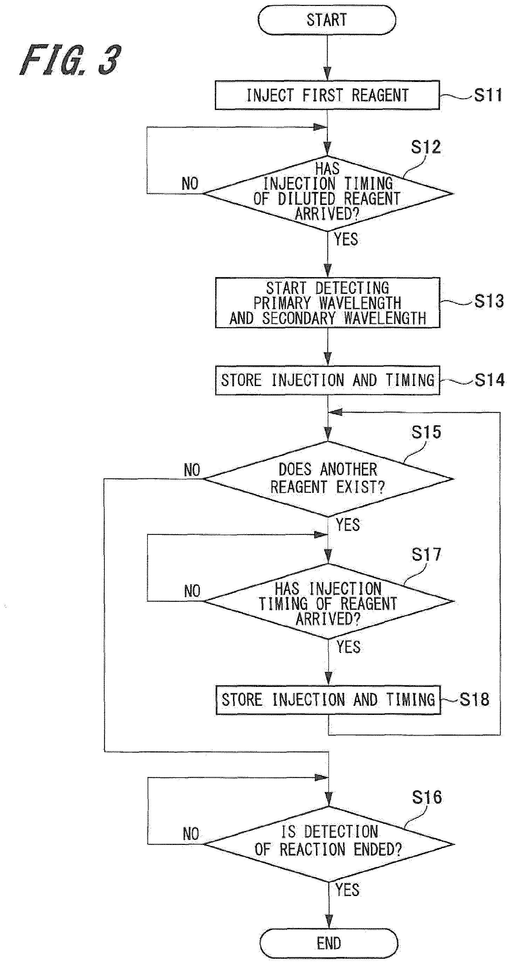

Next, an example of analysis processing performed on specimens under control by the analysis control section 32 of the calculator 30 will be described with reference to a flowchart shown in Fig. 3.

As illustrated in Fig. 1, in the automatic analyzer 1, a plurality of containers is arranged in each of the turntables 2 to 6, and in conjunction with rotation of each of the turntables 2 to 6, a large number of specimens are analyzed at the same time. As described above, in the automatic analyzer 1, a plurality of analyses is simultaneously performed in parallel with each other. However, analysis results are managed individually for each of the specimens. The analysis processing shown in the flowchart in Fig. 3 is analysis processing for one specimen injected into one reaction container 26.

First, the analysis control section 32 injects the first reagent into the reaction container 26 (step S11).

Next, the analysis control section 32 determines whether or not a time for injecting the diluted specimen into the reaction container 26 on the reaction turntable 6 by using the sampling pipette 8 (here, a timing for injecting the first reagent) is reached (step S12). If it is determined that the time for injecting injecting the reagent is reached, the analysis control section 32 starts a step of measuring, by the multi-wavelength photometer 16, a luminous intensity of the diluted specimen in the reaction container 26 at a timing when the reaction container 26 rotating with the reaction turntable 6 passes in front of the multi-wavelength photometer 16 (step S13). The measurement of the luminous intensity is performed with the two wavelengths: a primary wavelength and a secondary wavelength. The measurement of the luminous intensity by the multi-wavelength photometer 16 is performed every time a relevant reaction container 26 rotates and passes through the multi-wavelength photometer 16, and data measured by the multi-wavelength photometer 16 are recorded, by using the control section 31, in the recording section 34 of the calculator 30.

Then, there is stored the timing for injecting the first reagent, which is a timing when the first reagent and the diluted specimen are mixed (step S14).

After that, the analysis control section 32 determines whether or not another reagent needs to be injected (step S15) . If it is determined that another reagent (second reagent) needs to be injected, the analysis control section 32 determines whether or not a timing for injecting another reagent (second reagent) is reached (step S17), and if it is determined that the timing for injection has been reached, the second reagent pipette 13 injects the second reagent, and stores the timing of injection (step S18) . Then, the operation returns to the process of step S15. As described above, the reagent-addition process in which a reagent is added to the reaction container 26 is executed.

If it is determined in step S15 that injection of the reagent has been completed, the analysis control section 32 determines whether or not a period of time for detecting reaction of the diluted specimen has ended (step S16), and waits until the period of time for detecting reaction has ended. Then, measurement of the luminous intensity of the diluted specimen in the reaction container 26 is completed at a timing when the period of time for detecting reaction has ended.

### [4. Display Processing Example]

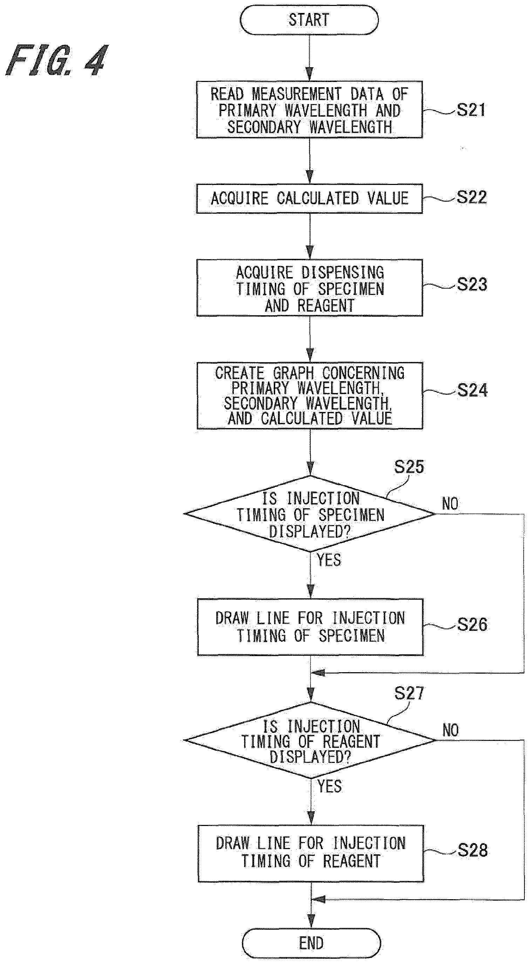

Next, processing of creating, by the display control section 33, a display screen for a measurement-data graph or for a measurement-data list, on the basis of the measurement data obtained through the analysis processing, will be described with reference to the flowchart in Fig. 4. The display screen created by this display control section 33 is displayed on the display section 35.

First, the display control section 33 reads, from the stored data, measurement data on the primary wavelength and the secondary wavelength measured by the multi-wavelength photometer 16 (step S21) . The measurement data are data in which the multi-wavelength photometer 16 performs measurements at regular intervals every time the reaction turntable 6 makes one rotation.

Then, the display control section 33 substitutes the measurement data on the primary wavelength and the secondary wavelength into an equation prepared in advance, to thereby obtain a calculated value (step S22).

Next, the display control section 33 uses the acquired measurement data on the primary wavelength and the secondary wavelength and the calculated value obtained in step S22 to thereby generate a measurement-data graph indicating a change over time in these values (step S24). Subsequently, the display control section 33 determines whether or not the measurement-data graph is set so as to display a timing when a reagent is injected into the reaction container 26 (step S25). If it is determined that the reagent-injected timing is set to be displayed, the display control section 33 displays, in the measurement-data graph, a line indicating the timing when a reagent is injected, on the basis of the timing acquired in step S23 (step S26).

Then, the display control section 33 determines whether or not the measurement-data graph is set so as to display a timing when a reagent is injected into the reaction container 26 (step S27). If it is determined that the reagent-injected timing is set to be displayed, the display control section 33 displays, in the measurement-data graph, a line indicating the timing when the reagents (the first reagent and the second reagent) are injected, on the basis of the timing acquired in step S23 (step S28) .

### [5. Specific Display example]

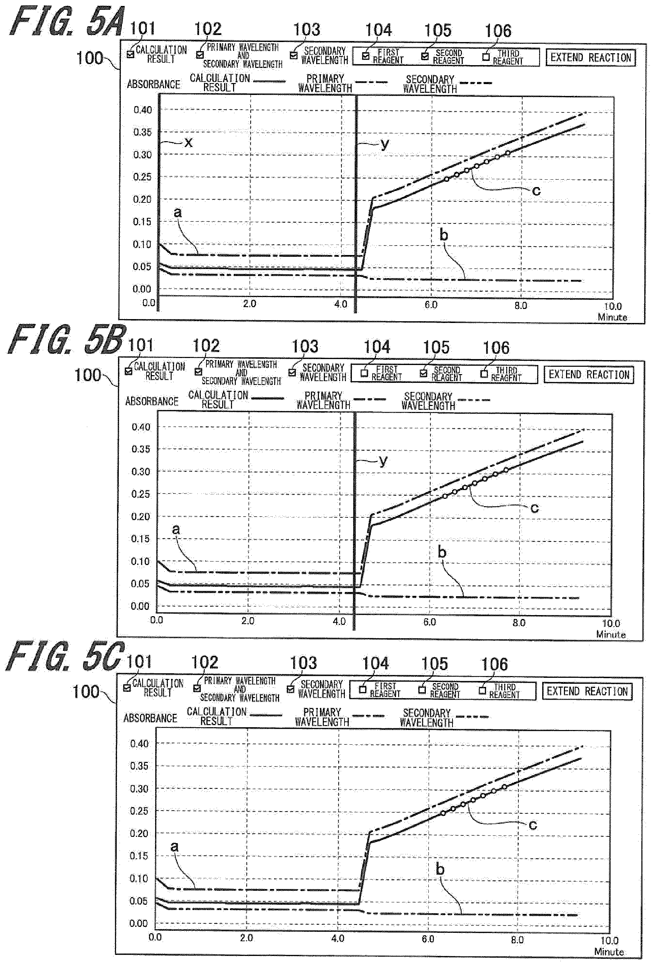

Next, a display example of screens for measurement results created by the display control section 33 will be described with reference to Fig. 5 to Fig. 7.

Fig. 5 illustrates display screens 100 for a measurement-data graph indicating changes in three items: the primary wavelength, the secondary wavelength, and the calculated value. There is a difference in three display screens 100 illustrated in Fig. 5A, Fig.5B, and Fig.5C, between reagent-injection timings and display modes for the reagent-injection timings.

Each of the display screens 100 is a graph of measurement data in which the horizontal axis represents time (minute) and the vertical axis represents absorbance. In the upper portion of each of the display screens 100, there are displayed a selection button 101 for a calculation result, a selection button 102 for a primary wavelength, and a selection button 103 for a secondary wavelength. In the example illustrated in Fig. 5, a primary wavelength "a," a secondary wavelength "b," and a calculation result "c" are displayed on the graph in a state where all the selection buttons 101, 102, and 103 are selected.

Furthermore, in the upper portion of the display screen 100, there are displayed a selection button 104 for an injection timing of the first reagent, a selection button 105 for an injection timing of the second reagent, and a selection button 106 for an injection timing of the third reagent.

Note that an operator, who operates the calculator 30, operates the selection buttons 101 to 106 through a user interface using a mouse or the like, whereby a displaying state (ON state) and a non-displaying state (OFF state) are selected for each of the items.

The display screen 100 illustrated in Fig. 5A represents an example in which two buttons of the selection button 104 for a timing of the first reagent and of the selection button 105 for an injection timing of the second reagent, are in an ON state. In the case of Fig. 5A, the display screen 100 shows a line "x" representing the injection timing of the first reagent and a line "y" representing the injection timing of the second reagent. The line "x" representing the injection timing of a reagent is located at 0 second on the graph, and is displayed on the left end of the graph. The line "y" representing the injection timing of the second reagent is displayed at approximately 4.3 minutes
on the graph.

Note that, in the case where a plurality of lines "x" and "y" is displayed on one screen at the same time as illustrated in Fig. 5A, it may be possible to change display modes for each of the rows "x" and "y." For example, different display colors may be used for the line "x" and the line "y." Alternately, it may be possible to display the line "y" with a thick line or solid line, and display the line "x" with a thin line or broken line.

The display screen 100 illustrated in Fig. 5B represents an example in which the selection button 105 for an injection timing of the second reagent is in an ON state.

In the case of Fig. 5B, the display screen 100 shows only the line "y" representing the injection timing of the first reagent.

The display screen 100 illustrated in Fig. 5C represents an example in which all the three selection buttons 104, 105, and 106 for injection timings are in an OFF state.

In the case of Fig. 5C, the rows "x" and "y" representing the injection timing are not shown on the display screen 100.

Note that, in Fig. 5A, Fig. 5B, and Fig. 5C, the horizontal axis represents time, but the horizontal axis may represent the number of rotations. Furthermore, Fig. 5 shows an example in which the injection timing of the third reagent is not displayed, but in the case where the selection button 106 is in an ON state, a line indicating the injection timing of the third reagent is shown on the display screen 100.

As described above, the injection timing of the reagent is shown on a screen displaying a graph of measurement data of analysis results, by using the automatic analyzer 1. Therefore, an operator who views the display screen 100 can easily judge whether or not the measurement results on the graph are based on adding reagent or specimen at an appropriate timing. For example, as illustrated in Fig. 5A or Fig. 5B, the operator can understand that values of the primary wavelength "a" and the calculation result "c" change immediately after the second reagent is injected and can understand that specimens are appropriately analyzed, by displaying the line "y" representing the injection timing of the second reagent. In the case where a value of the primary wavelength "a" or other values changes before the injection timing of the reagent, or conversely, in the case where almost no change can be found after the injection timing of the reagent, it can be understood that a certain abnormality such as improper injection of the reagent is more likely to exist.

Furthermore, even in the case where a plurality of reagents is injected at different timings, the operator who views the display screen 100 can understand that respective reagents are injected at appropriate timings.

Moreover, since the injection timing of the first reagent is located at a position of 0 second at the left end, the operator can understand that the specimen is injected at an appropriate timing and is analyzed on the basis of this timing, and that the automatic analyzer 1 operates at an appropriate timing.

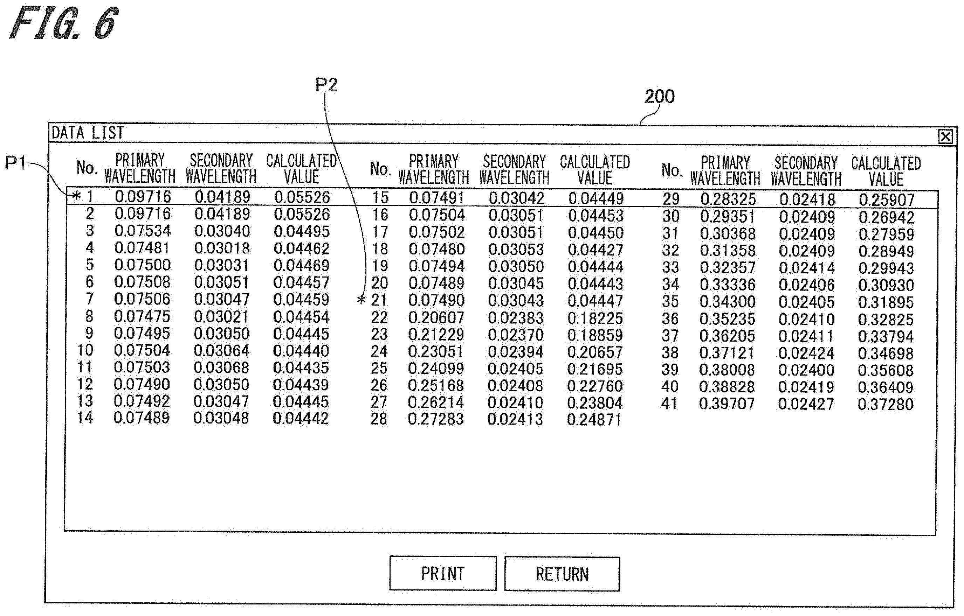

Fig. 6 illustrates another display example for analysis results.

A display screen 200 illustrated in Fig. 6 shows an example of a measurement data list indicating a list of measurement data.

The display screen 200 shows a list of primary wavelengths, secondary wavelengths, which are measured by the multi-wavelength photometer 16, and calculation values obtained from the measurement data on these wavelengths. In this display screen 200, the numbers 1 to 41 indicated as "No." each represent the number of rotations of the reaction turntable 6. Namely, the multi-wavelength photometer 16 performs measurements at the time when the reaction turntable 6 makes one rotation and a target reaction container 26 passes through the multi-wavelength photometer 16, and in this example, measurements are performed from the first rotation to the 41st rotation. The time for the reaction turntable 6 to make one rotation is constant (for example, approximately several tens of seconds), and measurement time can be obtained by multiplying the number of rotations by a period of time required for making one rotation.

Then, in the display screen 200, there is displayed a symbol P1 indicating the injection timing of the first reagent, beside the measured value of the first rotation (No. 1) . In addition, there is displayed a symbol P2 indicating the injection timing of the second reagent, beside the measured value of the 21st rotation (No. 21).

In Fig. 6, the symbol P1 indicating the injection timing of the specimen and the symbol P2 indicating the injection timing of the first reagent have the same graphic, but different graphics may be used, or different display colors may be applied.

It is found that operation is performed at appropriate timing as in the case of the display of the graph in the example illustrated in Fig. 5, by performing a display indicating an injection timing in the list of measurement data as illustrated in Fig. 6.

Note that the example illustrated in Fig. 6 shows an example in which no selection button is displayed. However, as with the example illustrated in Fig. 5, it may be possible to display a selection button for indicating ON/OFF of a display of the injection timing.

Furthermore, only the injection timings of the first reagent and the second reagent are given for a display of the injection timing of reagent illustrated in Fig. 5 and Fig. 6. However, in the case where another reagent (third reagent) having a different injection timing exists, the injection timing of this third reagent may be displayed at the same time.

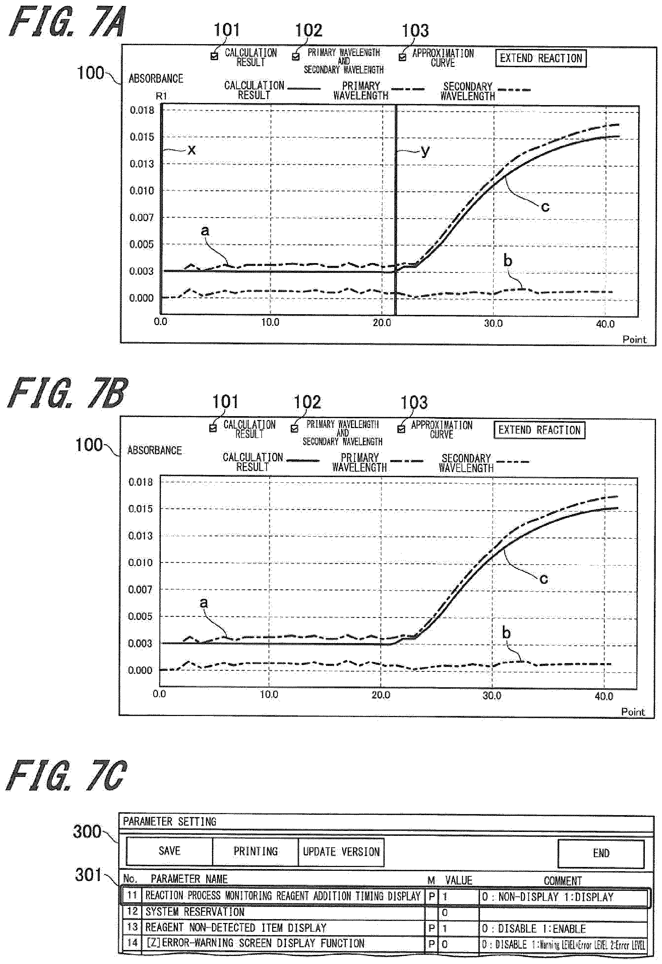

Fig. 7 illustrates another display example for analysis results.

The screens illustrated in Fig. 7A and Fig. 7B are display screens 100 for a measurement-data graph indicating changes in three items: the primary wavelength, the secondary wavelength, and the calculated value, as with the display screens 100 illustrated in Fig. 5. In these display screens 100 for the measurement-data graph illustrated in Fig. 7, the horizontal axis represents [Point] indicating the number of rotations. The number of rotations can be converted into a time by being multiplied by a period of time required for one rotation.

Furthermore, a display screen 300 illustrated in Fig. 7C is a screen for setting parameters.

In the case of the display screens 100 illustrated in Fig. 7A and Fig. 7B, the selection buttons 104 to 106 for the injection timings of the first to third reagents described in the example illustrated in Fig. 5 are not illustrated.

In addition, in this example, as illustrated in Fig. 7C, an item "display for addition timing of reagent for monitoring reaction process" is prepared as one parameter selection section 301 in the display screen 300 for setting parameters illustrated in Fig. 7C to thereby be able to select display or non-display of the addition timing of reagent by selecting "0" or "1" as a value of a corresponding column. In a comment column of the parameter selection section 301, "0: non-display, 1: display" is described, and in a column of a value, "0" or "1" can be selected through user operation. Selection made through user operation on the display screen 300 for setting parameters is reflected on the display screen 100 illustrated in Fig. 7A and Fig. 7B.

For example, when a value "1" (display of the addition timing of reagent) is selected in advance in the parameter selection section 301 on the display screen 300 for setting parameters illustrated in Fig. 7C, the display screen 100, which is a graph, displays a line "x" representing the injection timing of the first reagent and the line "y" representing the injection timing of the second reagent, as illustrated in Fig. 7A. Furthermore, in the case where a value "0" (the addition timing of reagent is not displayed) is selected in advance in the parameter selection section 301 on the display screen 300 for setting parameters in Fig. 7C, the display screen 100, which is a graph, does not display any line representing the injection timing of reagent as illustrated in Fig. 7B.

Note that, in the display screen 300 for setting parameters illustrated in Fig. 7C, an example is given in which display and non-display of the addition timings of reagent are collectively selected. However, it may be possible to individually select display and non-display of addition timing for a plurality of reagents on the screen for setting parameters.

### [6. Modification]

Note that the display screens illustrated in Fig. 5 to Fig. 7 described in the exemplary embodiment are merely examples, and a display screen with other display modes may be employed.

For example, in the measurement-data graph illustrated in Fig. 5, the timing of putting a specimen into a reaction container is located on the left end, and changes in the measurement data are shown by the elapsed time from the timing when the specimen is put into the reaction container. In contrast to this, it may also be possible to show, in a display screen, changes in the measurement data from the addition timing of the reagent, with, for example, the addition timing of a reagent into the reaction container as a base point at the left end of the graph. In this case, it is preferable that, for example, a display of a line or symbol indicating the addition timing of the reagent is performed at a position serving as the base point at the left end.

Furthermore, the graph shown in Fig. 5 and the data list shown in Fig. 6 may be displayed in, for example, one screen of the display section 35 at the same time.

The display screen 100 for a graph shown in Fig. 7A or Fig. 7B and the parameter setting screen 300 shown in Fig. 7C may be displayed in one screen at the same time. Alternatively, the parameter setting screen 300 shown in Fig. 7C may be displayed as another window so as to be superimposed on the display screen 100 for the graph shown in Fig. 7A or Fig. 7B. Furthermore, the parameter setting screen 300 illustrated in Fig. 7C is one example of a setting screen for setting the presence or absence of a display of the reagent-addition timing, and it may be possible to set the presence or absence of a display of the reagent-addition timing, by using other setting screens.

Furthermore, a configuration is such that the display screen created by display control section 33 of the calculator 30 is displayed on the display section 35, but the configuration may be such that the display screen created by the display control section 33 is displayed on an external display device other than the automatic analyzer 1. Alternatively, the recording section 34 may record the display screen created by the display control section 33. Moreover, the configuration may also be such that a printer is connected to the calculator 30, and the display screen created by the display control section 33 is printed using the printer.

Additionally, the configuration of the automatic analyzer 1 illustrated in Fig. 1 is one example, and the present invention is applicable to automatic analyzers having various configurations, in which analysis is conducted by addition of a reagent to a specimen. In the case of, for example, the automatic analyzer 1 illustrated in Fig. 1, the configuration is such that two reagents (the first reagent and the second reagent) are added to the reaction containers 26, but the present invention may be applied to a device in which one reagent, or three or more reagents are added. In the case where three or more reagents are added, it is preferable that the display screen of analysis results individually displays the addition timings of the respective reagents.

Furthermore, in the automatic analyzer 1 illustrated in Fig. 1, the multi-wavelength photometer 16 measures absorbance of a specimen in the reaction container 26, and the measurement data on the absorbance are displayed. In contrast to this, the configuration may be such that the automatic analyzer includes a measuring section that measures an optical property other than the absorbance and there is generated a display screen in which the timing for adding a reagent can be recognized, when data measured by the measuring section are displayed.

In addition, the present invention is not limited to the exemplary embodiments described above, and it is needless to say that other various applications and various modifications are possible without departing from the gist of the present invention specified in the scope of claims.

### Brief Description of the Reference Symbols

1... automatic analyzer
2...sample turntable
3...dilution turntable
4...first reagent turntable
5...second reagent turntable
6...reaction turntable
7...sample-diluting pipette
8...sampling pipette
16...multi-wavelength photometer
21...specimen container
22...container
23...dilution container
24...first reagent container
25...second reagent container
26...reaction container
30...calculator
31...control section
32...analysis control section
33...display control section
34...recording section
35...display section
100, 200, 300...display screen
101, 102, 103, 104, 105...selection button
301...parameter selection section

## Claims

1. An automatic analyzer (1), comprising:
a specimen-container holding section (2) that holds a specimen container (21) storing a specimen;
a reagent-container holding section (4,5) that holds a reagent container (24, 25) storing a first reagent and a second reagent;
a reaction-container holding section (6) that holds a reaction container (26) in which the first reagent and second reagent taken out from the reagent container are added to the specimen taken out from the specimen container to cause reaction;
a measuring section (16) that measures an optical property of the specimen in the reaction container to output a measurement result; and
a display control section (33) configured to create a display screen for a measurement-data graph indicating a change over time in measurement data measured by the measuring section, or for a measurement-data list indicating a list of the measurement data,
the automatic analyzer **characterized in that** the display control section is further configured to add, to the display screen, a display indicating the timing when the first reagent is added to the reaction container and/or the timing when the second reagent is added to the reaction container;
wherein the display control section is configured to display, on the display screen:
a first button (104) for selecting on or off of a display indicating the timing the first reagent has been added, and
a second button (105) for selecting on or off of a display indicating the timing the second reagent has been added; and
wherein the display control section is configured to individually display, on the display screen, the display indicating the timing the first reagent has been added and/or the display indicating the timing the second reagent has been added.

2. The automatic analyzer according to claim 1, wherein
when generating a measurement data list indicating a list of measurement data to be displayed on the display screen, the display control section adds a symbol indicating an addition timing, to a measurement data at the addition timing of the reagent.

3. A method of displaying an analysis result, comprising the steps of:
adding a first reagent and a second reagent to a specimen in a reaction container to cause the reagent and the specimen to react with each other;
measuring an optical property of the specimen in the reaction container;
creating a display screen for a measurement-data graph indicating a change over time in measurement data on the optical property, or for a measurement-data list indicating a list of the measurement data;
displaying, on the display screen, a first button for selecting on or off of a display indicating the timing the first reagent has been added; and a second button for selecting on or off of a display indicating the timing the second reagent has been added;
wherein operation of the first button adds, to the display screen, a display indicating a timing when the first reagent is added to the reaction container; and wherein operation of the second button adds, to the display screen, a display indicating a timing when the second reagent is added to the reaction container.

## Patentansprüche

1. Automatischer Analysator (1), folgendes aufweisend:
einen Probenbehälter-Halteabschnitt (2), der einen Probenbehälter (21) hält, der eine Probe speichert;
einen Reagenzbehälter-Halteabschnitt (4,5), der einen Reaktionsbehälter (24,25) hält, der ein erstes Reagenz und ein zweites Reagenz speichert;
einen Reaktionsbehälter-Halteabschnitt (6), der einen Reaktionsbehälter (26) hält, in dem das aus dem Reagenzbehälter herausgenommene erste und zweite Reagenz der aus dem Probenbehälter herausgenommenen Probe zugesetzt werden, um Reaktion zu bewirken;
einen Messabschnitt (16), der eine optische Eigenschaft der Probe in den Reaktionsbehälter misst, um ein Messergebnis auszugeben; und
einen Anzeige-Kontrollabschnitt (33), der zur Erzeugung eines Anzeigebildschirms für einen Messdaten-Graph, der eine Änderung über die Zeit in durch den Messabschnitt gemessenen Messdaten angibt, oder für eine Messdatenliste, die eine Liste der Messdaten angibt, konfiguriert ist,
wobei der automatische Analysator **dadurch gekennzeichnet ist, dass** der Anzeige-Kontrollabschnitt weiterhin konfiguriert ist, um, zu dem Anzeigebildschirm, eine Anzeige hinzuzufügen, die den Zeitpunkt angibt, wenn das erste Reagenz dem Reaktionsbehälter zugesetzt wird, und/oder den Zeitpunkt, wenn das zweite Reagenz dem Reaktionsbehälter zugesetzt wird;
wobei der Anzeige-Kontrollabschnitt zur Anzeige, auf dem Anzeigebildschirm, von folgendem konfiguriert ist:
einem ersten Knopf (104) zum Wählen von Ein oder Aus einer Anzeige, die den Zeitpunkt angibt, zu dem das erste Reagenz zugesetzt worden ist, und
einem zweiten Knopf (105) zum Wählen von Ein oder Aus einer Anzeige, die den Zeitpunkt angibt, zudem das zweite Reagenz zugesetzt worden ist; und
wobei der Anzeige-Kontrollabschnitt konfiguriert ist, um auf dem Anzeigebildschirm, die Anzeige, die den Zeitpunkt, zu dem das erste Reagenz zugesetzt worden ist, und/oder die Anzeige, die den Zeitpunkt angibt, zu dem das zweite Reagenz zugesetzt worden ist, einzeln anzuzeigen.

2. Automatischer Analysator nach Anspruch 1, wobei
wenn eine Messdatenliste erzeugt wird, die eine Liste von auf dem Anzeigebildschirm anzuzeigenden Messdaten angibt, der Anzeige-Steuerabschnitt ein Symbol, das einen Zugabezeitpunkt angibt, zu einem Messdatenwert zum Zugabezeitpunkt des Reagenz hinzufügt.

3. Verfahren zum Anzeigen eines Analyseergebnisses, umfassend die folgenden Schritte:
Zugabe eines ersten Reagenz und eines zweiten Reagenz zu einer Probe in einem Reaktionsbehälter, um zu bewirken, dass das Reagenz und die Probe miteinander reagieren,
Messen einer optischen Eigenschaft der Probe in dem Reaktionsbehälter,
Erzeugen eines Anzeigebildschirms für einen Messdaten-Graph, der eine Änderung über die Zeit in Messdaten für die optische Eigenschaft angibt, oder für eine Messdatenliste, die eine Liste der Messdaten angibt;
Anzeigen, auf dem Anzeigebildschirm, eines ersten Knopfs zum Wählen von Ein oder Aus einer Anzeige, die den Zeitpunkt angibt, zu dem das erste Reagenz zugesetzt worden; und eines zweiten Knopfs zum Wählen von Ein oder Aus einer Anzeige, die den Zeitpunkt angibt, zu dem das zweite Reagenz zugesetzt worden ist;
wobei die Bedienung des ersten Knopf, dem Anzeigebildschirm, eine Anzeige hinzufügt, die einen Zeitpunkt anzeigt, wenn das erste Reagenz dem Reaktionsbehälter zugesetzt wird; und wobei die Bedienung des zweiten Knopf, dem Anzeigebildschirm, eine Anzeige hinzufügt, die einen Zeitpunkt anzeigt, wenn das zweite Reagenz dem Reaktionsbehälter zugefügt wird.

## Revendications

1. Analyseur automatique (1), comprenant :
une section de maintien de récipient de spécimen (2) qui maintient un récipient de spécimen (21) stockant un spécimen ;
une section de maintien de récipient de réactif (4, 5) qui maintient un récipient de réactif (24, 25) stockant un premier réactif et un deuxième réactif ;
une section de maintien de récipient de réaction (6) qui maintient un récipient de réaction (26) où le premier réactif et le deuxième réactif extraits du récipient de réactif sont ajoutés au spécimen extrait du récipient de spécimen pour provoquer une réaction ;
une section de mesure (16) qui mesure une propriété optique du spécimen dans le récipient de réaction afin de délivrer en sortie un résultat de mesure ; et
une section de commande d'affichage (33) configurée pour créer un écran d'affichage pour un graphique de données de mesure indiquant une variation dans le temps des données de mesure mesurées par la section de mesure ou pour une liste de données de mesure indiquant une liste des données de mesure,
l'analyseur automatique étant **caractérisé en ce que** la section de commande d'affichage est en outre configurée pour ajouter, à l'écran d'affichage, un affichage indiquant le moment où le premier réactif est ajouté au récipient de réaction et/ou le moment où le deuxième réactif est ajouté au récipient de réaction ;
dans lequel la section de commande d'affichage est configurée pour afficher, sur l'écran d'affichage :
un premier bouton (104) pour sélectionner l'activation ou la désactivation d'un affichage indiquant le moment où le premier réactif a été ajouté, et
un deuxième bouton (105) pour sélectionner l'activation ou la désactivation d'un affichage indiquant le moment où le deuxième réactif a été ajouté ; et
dans lequel la section de commande d'affichage est configurée pour afficher individuellement, sur l'écran d'affichage, l'affichage indiquant le moment où le premier réactif a été ajouté et/ou l'affichage indiquant le moment où le deuxième réactif a été ajouté.

2. Analyseur automatique selon la revendication 1, dans lequel
lors de la génération d'une liste de données de mesure indiquant une liste de données de mesure à afficher sur l'écran d'affichage, la section de commande d'affichage ajoute un symbole indiquant un moment d'ajout, à des données de mesure au moment d'ajout du réactif.

3. Procédé d'affichage d'un résultat d'analyse, comprenant les étapes qui consistent :
à ajouter un premier réactif et un deuxième réactif à un spécimen dans un récipient de réaction pour faire réagir le réactif et le spécimen ;
à mesurer une propriété optique du spécimen dans le récipient de réaction ;
à créer un écran d'affichage pour un graphique de données de mesure indiquant une variation dans le temps des données de mesure sur la propriété optique, ou pour une liste de données de mesure indiquant une liste des données de mesure ;
à afficher, sur l'écran d'affichage, un premier bouton pour sélectionner l'activation ou la désactivation d'un affichage indiquant le moment où le premier réactif a été ajouté ; et un deuxième bouton pour sélectionner l'activation ou la désactivation d'un affichage indiquant le moment où le deuxième réactif a été ajouté ;
dans lequel le fonctionnement du premier bouton ajoute, à l'écran d'affichage, un affichage indiquant un moment où le premier réactif est ajouté au récipient de réaction ; et dans lequel le fonctionnement du deuxième bouton ajoute, à l'écran d'affichage, un affichage indiquant un moment où le deuxième réactif est ajouté au récipient de réaction.
